# EUROPÄISCHE PATENTSCHRIFT

(11) **EP 0 727 905 B1**
(45) Veröffentlichungstag und Bekanntmachung des Hinweises auf die Patenterteilung: **05.04.2000**
(21) Anmeldenummer: 96200194.7
(22) Anmeldetag: 29.01.1996
(51) Int. Cl.: H04N 5/46, H04N 5/60

(54) **Multistandard-Fernsehempfänger**
Multi-standard television receiver
Récepteur de télévision multi-standard

(30) Priorität: 11.02.1995 DE 19504566
(43) Veröffentlichungstag der Anmeldung: 21.08.1996
(73) Patentinhaber: Philips Corporate Intellectual Property GmbH, 52064 Aachen (DE); Koninklijke Philips Electronics N.V., 5621 BA Eindhoven (NL)
(72) Erfinder: Kühn, Hans Jürgen, D-223355 Hamburg (DE); Buhse, Ulf, D-223355 Hamburg (DE)
(74) Vertreter: von Laue, Hanns-Ulrich, Dipl.-Ing.

(56) Entgegenhaltungen:
- EP-A- 0 407 802
- EP-A- 0 626 786
- WO-A-91/11880
- DE-A- 3 346 981
- DE-A- 19 508 257

## Beschreibung

Die Erfindung betrifft einen Multistandard-Fernsehempfänger, in welchem ein in einem Fernsehsignal enthaltenes, auf einen Bildträger aufmoduliertes Bildsignal auf eine Bildsignal-Zwischenfrequenz und ein in dem Fernsehsignal enthaltenes Stereo-Tonsignal oder Zweiton-Signal, das zwei Tonträgern aufmoduliert ist, auf zwei erste Tonsignal-Zwischenfrequenzen umgesetzt werden.

Ein in einem Fernsehempfänger auf Zwischenfrequenzlage umgesetztes Bildsignal enthält im allgemeinen Bildinformationen, die einem Bildträger aufmoduliert sind, sowie Toninformationen, die einem oder zwei Tonträgern aufmoduliert sind. Je nach Übertragungsnorm des Fernsehsignals ist der Frequenzabstand zwischen dem Bildträger einerseits und dem oder den Tonträgern andererseits verschieden gewählt. Daher sind in bekannten Fernsehempfängern nach der Bildung einer zweiten Ton-ZF mehrere Filter mit verschiedenen Mittenfrequenzen vorgesehen, die die Tonsignale ausfiltern. Für einen sogenannten Multistandard-Fernsehempfänger, der beispielsweise dazu geeignet ist, Fernsehsignale aller bekannten Fernsehnormen zu verarbeiten, sind sieben derartige Tonsignal-Filter erforderlich. Dabei kommen je nach übertragener Fernsehnorm und des Frequenzabstandes zwischen den Tonträgern ein oder mehrere verschiedene dieser Filter zum Einsatz.

Ferner ist es aus der Veröffentlichung IEEE, 1993, Seiten 104 und 105 aus dem Aufsatz "Adjustment Free Multistandard Sound-IF Integrated Circuit with automatic Sound Carrier Identification" bekannt, eine erste und eine zweite Mischung des Signals durchzuführen, was zu dritten festen Zwischenfrequenzen von 500 kH und 260 kHz führt.

Dabei ist es erforderlich, Spiegelfrequenzen zu unterdrücken, was sehr aufwendig ist. Außerdem ist der Ansatz nur vorteilhaft, wenn auch die zweite Ton-ZF in der Integration der Schaltung enthalten ist und dann die ZF-Filter für 500 kHz bzw. 260 kHz integriert werden können.

Es ist Aufgabe der Erfindung, einen Multistandard-Fernsehempfänger der eingangs genannten Art anzugeben, welcher bei möglichst einfachem Aufbau mit weniger Filtern für die Ausfilterung eines in dem Fernsehsignal enthaltenen Stereo-Tonsignals auskommt.

Diese Aufgabe ist erfindungsgemäß dadurch gelöst, daß zur Ausfilterung des Stereo-Tonsignals zwei Tonsignal-Filter mit fester vorgegebener Filter-Mittenfrequenz vorgesehen sind und daß Mittel zur Frequenz-Verschiebung vorgesehen sind, welche den in dem auf Zwischenfrequenzlage umgesetzten Bildsignal enthaltenen Bildträger in Abhängigkeit des Frequenz-Abstandes des Bildträgers des Fernsehsignals zu dessen Tonträgern auf eine solche Frequenz verschieben, daß die mit diesem verschobenen Bildträger gemischten Ton-Zwischenfrequenz-Signale der ersten Ton-Zwischenfrequenzen auf zwei zweiten Tonsignal-Zwischenfrequenzen auftreten, die mittels der Ton-Zwischenfrequenz-Filter ausgefiltert werden.

Erfindungsgemäß sind für die Ausfilterung eines Zweiton-Signals oder eines Stereo-Tonsignals, das in einem auf eine Zwischenfrequenz umgesetzten Fernsehsignal enthalten ist, zwei Tonsignal-Filter mit fester Mittenfrequenz vorgesehen. Diese Filter dienen zur Ausfilterung des Stereo-Tonsignales, nachdem dieses nach der Umsetzung auf die ersten Zwischenfrequenzen auf zweite Zwischenfrequenzen mittels Mischung mit beispielsweise dem Bildträger umgesetzt wurde. Bei verschiedenen Frequenzabständen zwischen dem Träger des Bildsignals und den Trägerfrequenzen der Tonsignale würden sich dabei jedoch verschiedene Mittenfrequenzen der umgesetzten Tonsignale ergeben. Es sind daher erfindungsgemäß Mittel zur Frequenz-Verschiebung vorgesehen, welche zunächst dazu dienen, den zuvor ausgefilterten Bildträger bezüglich seiner Frequenz-Lage zu verschieben. Diese Verschiebung wird dabei so gewählt, daß die auf die erste Zwischenfrequenzlage umgesetzten Tonsignale nach Mischung mit dem bezüglich seiner Frequenzlage umgesetzten Bildträger die zweiten Zwischenfrequenzlagen und somit genau die Mittenfrequenzen der zwei Tonsignal-Filter aufweisen. Damit können diese Filter immer mit fester Frequenz arbeiten, welche insbesondere unabhängig von dem Frequenzabstand des Bildträgers zu den Tonträgern ist. Es wird also quasi der Frequenzabstand zwischen dem Bildträger und den Tonträgern in den ersten Zwischenfrequenzen dahingehend korrigiert, daß die Mittel zur Frequenz-Verschiebung einen ausgangsseitig in der Weise verschobenen Bildträger liefern, daß dieser immer eine bestimmte Frequenz aufweist, welche unabhängig von der Übertragungsnorm des empfangenen Fernsehsignals ist. Damit werden dann auch die Tonsignale in der ersten ZF-Lage durch Mischung mit diesem umgesetzten Bildträger immer auf feste Frequenzen, nämlich die zweiten Ton-Zwischenfrequenzen, umgesetzt, die mittels der Tonsignal-Filter ausgefiltert werden.

Damit ist insbesondere erreicht, daß für ein Stereo-Tonsignal nur noch zwei Filter fester Frequenz erforderlich sind. Dies bedeutet gegenüber Anordnungen mit beispielsweise fünf oder sieben derartigen Filtern eine beträchtliche Reduktion des Aufwandes, insbesondere da diese Filter als Keramik-Filter aufgebaut sind und kaum in integrierten Schaltkreisen zu realisieren sind. Der Aufwand der Schaltung ist auch dadurch gering, daß in Multistandard-Fernsehempfängern meist eine Schaltungsanordnung zur Detektion der Übertragungsnorm des Fernsehsignals vorgesehen ist, deren Information unmittelbar dazu herangezogen werden kann, den Frequenzabstand zwischen dem Bildträger und den Tonträgern des empfangenen Fernsehsignals zu bestimmen, da dieser Frequenzabstand je nach Übertragungsnorm fest und vorbekannt ist.

Gemäß einer Ausgestaltung der Erfindung ist für die Mittenfrequenzen der Tonsignal-Filter vorgesehen, daß diese 5,5 bzw. 5,742 MHz betragen. Diese Frequenzabstände sind für Fernsehsignale der B/G-Norm vorgesehen. Beim Empfang eines Fernsehsignals dieser Übertragungsnormen ist somit keine Frequenzverschiebung des Bildträgers vor Mischung mit den auf die erste ZF-Frequenzlage umgesetzten Tonträgern erforderlich. Beim Empfang von Fernsehsignalen anderer Übertragungsnormen ist eine Umsetzung erforderlich, wobei die Frequenzverschiebung des Bildträgers in der Weise zu erfolgen hat, daß die mit dem Bildträger gemischten, auf die zweite ZF-Lage umgesetzten Tonsignale die genannten Mittenfrequenzen der Filter treffen.

Für die Auslegung der oben angegebenen Mittel kann vorteilhaft, wie gemäß einer weiteren Ausgestaltung der Erfindung vorgesehen ist, vorgesehen sein, daß die Tonsignal-Zwischenfrequenzen 32,4 und 32,158 MHz und die Frequenz, auf die der in dem auf Zwischenfrequenzlage umgesetzten Bildsignal enthaltene Bildträger verschoben wird, 37,9 MHz betragen.

Gemäß einer weiteren Ausgestaltung der Erfindung ist für die oben genannten Mittel zur Frequenz-Verschiebung des Bildträgers zwecks Mischung mit den auf die erste ZF-Lage umgesetzten Tonträgern vorgesehen, daß die Mittel zur Frequenz-Verschiebung eine Umsetz-Steuerung aufweisen, welche in Abhängigkeit der Übertragungsnorm des Fernsehsignals und des gemäß dieser Norm vorgesehenen Frequenz-abstandes zwischen Bildträger und den Tonträgern ein Umsetzsignal an eine Umsetzvorrichtung gibt, welche in Abhängigkeit des Umsetzsignals eine Umsetzung der Frequenz des Bildträgers vornimmt, der in dem auf die Zwischenfrequenzlage umgesetzten Bildsignal enthalten ist.

Gemäß einer weiteren Ausgestaltung der Erfindung ist vorgesehen, daß die Mittel zur Frequenzverschiebung einen Phase-Locked-Loop-Schaltkreis aufweisen, der auf den bezüglich seiner Frequenz verschobenen Bildträger einrastet. Die PLL dient dem Zweck, die außer dem verschobenen Bildträger noch zusätzlich auftretenden Mischsignale zu unterdrücken. Sie rastet nur auf die Frequenz des verschobenen Bildträgers ein.

Gemäß einer weiteren Ausgestaltung der Erfindung ist vorgesehen, daß die Mittel einen Quadraturmischer aufweisen, in welchem der auf Zwischenfrequenzlage umgesetzte Bildträger und ein erstes Differenzsignal, das eine Frequenz entsprechend der Differenz der Frequenzen des in dem auf Zwischenfrequenzlage umgesetzten Bildträgers und des verschobenen Bildträgers aufweist, mittels eines ersten Multiplizierers gemischt werden, daß in dem Quadraturmischer der auf Zwischenfrequenzlage umgesetzte und in seiner Phasenlage um 90° verschobene Bildträger und ein zweites Differenzsignal, das mit dem ersten Differenzsignal identisch, gegenüber diesem jedoch bezüglich seiner Phasenlage um 90° verschoben ist, mittels eines zweiten Multiplizierers gemischt werden, und daß ein Addierer vorgesehen ist, der die Ausgangssignale der beiden Mischer addiert.

Mittels dieses Quadraturmischers wird eine Gewinnung des bezüglich seiner Frequenz umgesetzten Bildträgers in der Weise erreicht, daß die neben dem Bildträger zusätzlich auftretenden Mischprodukte bereits relativ gut unterdrückt sind. Wir dieses Signal dann zusätzlich der PLL zugeführt, so kann diese eindeutig auf den Bildträger einrasten und ausgangsseitig den Bildträger in von weiteren Mischprodukten befreiter Form liefern.

Nachfolgend wird ein Ausführungsbeispiel der Erfindung anhand der Zeichnung näher erläutert. Es zeigen:
**Fig. 1** ein Blockschaltbild eines erfindungsgemäßen Multistandard-Fernsehempfängers,
**Fig. 2** einige in dem Fernsehempfänger gemäß Fig. 1 auftretende Signale,
**Fig. 3** eine Ausgestaltung der Mittel zur Frequenz-Verschiebung der Schaltung gemäß Fig. 1 und
**Fig. 4** einen Quadraturmischer der Anordnungen gemäß Fig. 1 und/oder Fig. 3.

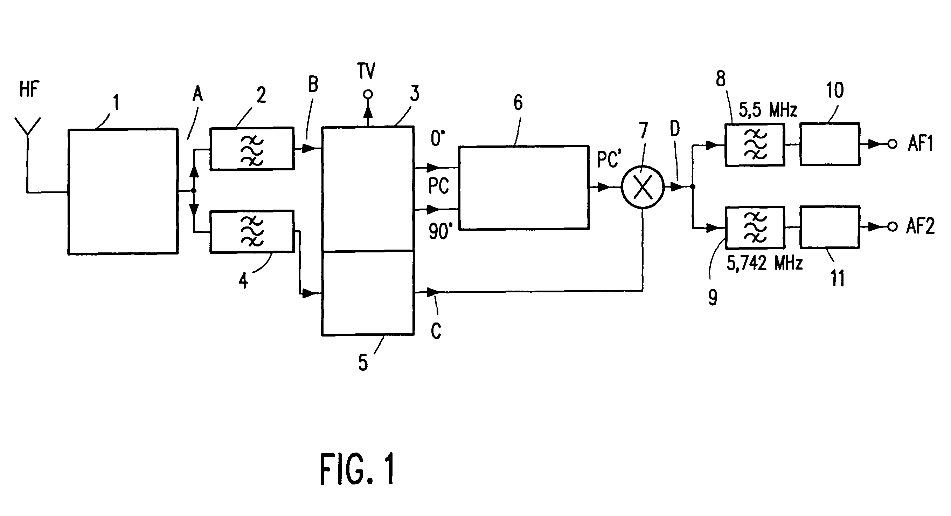

Ein in Fig. 1 in Form eines Blockschaltbildes dargestellter Multistandard-Fernsehempfänger dient dazu, Fernsehsignale verschiedener Übertragungsnormen zu verarbeiten. Je nach Übertragungsnorm können die FrequenzAbstände des Bildträgers, dem das Bildsignal aufmoduliert ist, und der Tonträger, denen ein Stereo-Tonsignal oder Zweiton-Signal aufmoduliert ist, differieren. Die in Fig. 1 dargestellte Schaltung umgeht die dabei für die Ausfilterung der Tonsignale entstehenden Probleme, indem der auf Zwischenfrequenzlage umgesetzte Bildträger bezüglich seiner Frequenz verschoben wird.

Die Schaltung gemäß Fig. 1 zeigt eingangsseitig einen HF-Tuner 1, dem ein Hochfrequenzsignal zugeführt wird, welches ein zu verarbeitendes Fernsehsignal enthält. In nicht näher dargestellter Weise ist im Tuner 1 eine Umsetzung dieses Fernsehsignals auf eine Zwischenfrequenzlage vorgesehen. Somit liefert der Tuner 1 ausgangsseitig das auf Zwischenfrequenzlage umgesetzte Bildsignal, welches Bildinformationen enthält, die auf einen Bildträger aufmoduliert sind, sowie Toninformationen, die auf zwei Tonträger in einer ersten Zwischenfrequenzlage aufmoduliert sind.

Dieses Ausgangssignal des Tuners 1, das in der Fig. 1 mit A bezeichnet ist, wird zwei Filtern zugeführt. Es ist einerseits ein Filter 2 vorgesehen, welches das Bildsignal, das auf den Bildträger aufmoduliert ist, sowie diesen Bildträger ausfiltert. Damit liefert das Filter 2 ausgangsseitig ein in der Figur mit B bezeichnetes Signal, bei dem es sich um das auf die Zwischenfrequenzlage umgesetzte Bildsignal handelt. Dieses Signal wird nachfolgend in einem Zwischenfrequenz-Demodulator 3 demoduliert, welcher als Ausgangssignal ein in der Fig. 1 mit TV bezeichnetes Bildsignal liefert.

Das Ausgangssignal A des Tuners 1 gelangt außerdem an ein Filter 4, welches die Tonsignale, die zwei Tonträgern mit erster Zwischenfrequenzlage aufmoduliert sind, ausfiltert. Diese Signale werden nachfolgend in einem geregelten Verstärker 5 verstärkt. Dieser Verstärker 5 liefert ausgangsseitig ein in der Fig. 1 mit C bezeichnetes Signal, bei dem es sich um die beiden Tonträger sowie den diesen aufmodulierten Tonsignalen handelt, wobei die Tonträger auf die erste Zwischenfrequenzlage umgesetzt sind.

Der in der Fig. 1 nur als Schaltungsblock angedeutete ZF-Demodulator 3 zur Demodulation des Bildsignals muß den Bildträger zur Demodulation des Fernsehsignals heranziehen. Somit kann dieser Bildträger, der zur Demodulation des Bildsignals ohnehin erforderlich ist, zur Mischung mit dem Signal C herangezogen werden. In den Schaltungen nach dem Stande der Technik geschieht dies unmittelbar. Dabei treten jedoch mischerausgangsseitig je nach Übertragungsnorm des Fernsehsignals die Tonsignale in verschiedenen Frequenzbereichen auf.

Dieses Problem ist durch die in Fig. 1 dargestellte erfindungsgemäße Schaltung dadurch behoben, daß der Bildträger PC, der in ursprünglicher Phasenlage, sowie in um 90° verschobener Phasenlage vorliegt, Mitteln 6 zur Frequenzverschiebung zugeführt wird. Diese Mittel 6 nehmen eine Verschiebung der Frequenz des Bildträgers PC vor. Bei dem Bildträger PC handelt es sich wie gesagt um den auf Zwischenfrequenz verschobenen Bildträger des empfangenen Fernsehsignals. Dieser Bildträger wird durch die Mittel 6 in der Weise bezüglich seiner Frequenz verschoben, daß nach Mischung dieses verschobenen Bildträgers mit dem Signal C die Tonsignale, die zwei Tonträgern in erster Zwischenfrequenzlage aufmoduliert sind, in gewünschten Frequenzbereichen einer zweiten Zwischenfrequenzlage auftreten.

In Fig. 1 ist der bezüglich seiner Frequenz verschobene Bildträger als Ausgangssignal der Mittel 6 mit PC' gekennzeichnet. Dieses Signal ist einem Mischer 7 zugeführt, auf den ebenfalls das Signal C geführt ist. Durch Mischung dieses bezüglich seiner Frequenz verschobenen Bildträgers mit den beiden auf die ersten Zwischenfrequenzlagen umgesetzten Tonträgern werden deren Mittenfrequenzen auf neue Frequenzbereiche umgesetzt, nämlich auf die zweiten Ton-Zwischenfrequenzlagen. Dieses so umgesetzte Signal ist in Fig. 1 mit D gekennzeichnet. Dieses Signal gelangt zu zwei Tonsignal-Filter 8 und 9, von denen in dem Ausführungsbeispiel gemäß Fig. 1 das Filter 8 eine Mittenfrequenz von 5,5 MHz und das Filter 9 eine Mittenfrequenz von 5,742 MHz aufweist. Die Ausgangssignale der beiden Filter 8 und 9 gelangen auf Demodulatoren 10 bzw. 11, welche die mittels der Filter 8 bzw. 9 ausgefilterten, auf Tonträger der zweiten Zwischenfrequenzlage aufmodulierten Tonsignale demoduliert, d.h. in Basisbandlage umsetzt. Somit liefern die Demodulatoren 10 und 11 ausgangsseitig die Stereo-Tonsignale AF1 und AF2.

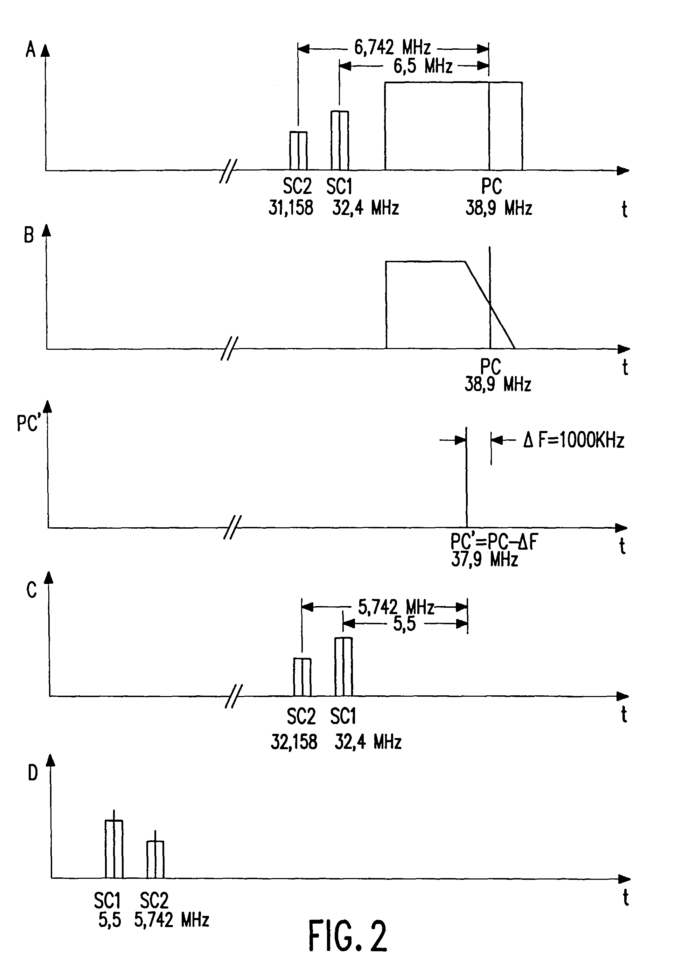

Die Arbeitsweise der Schaltungsanordnung gemäß Fig. 1 und dabei insbesondere die Arbeitsweise der Mittel 6 zur Frequenz-Verschiebung werden nachfolgend anhand der Fig. 2, welche einige in der Schaltungsanordnung gemäß Fig. 1 auftretende Signale darstellt, näher erläutert.

In Fig. 2 sind schematisch fünf Signale bezüglich ihres Frequenzspektrums dargestellt.

In Fig. 2 oben aufgetragen ist das Signal A, wie es der Tuner 1 der Schaltungsanordnung gemäß Fig. 1 ausgangsseitig liefert. Wie oben bereits erläutert wurde, setzt dieser Tuner das empfangene Fernsehsignal bereits auf Zwischenfrequenzlage um. In dem in Fig. 2 für das Signal A dargestellten Beispielsfalle wird davon ausgegangen, daß der Bildträger des empfangenen Fernsehsignals, der mit PC gekennzeichnet ist, auf eine Frequenz von 38,9 MHz umgesetzt wurde. Die beiden Tonträger, die auf erste Zwischenfrequenzlagen umgesetzt wurden, weisen Frequenzen von 32,4 bzw. 31,158 MHz auf. Bei dem empfangenen Fernsehsignal, bei dem es sich beispielhaft um ein Signal der DK-Norm handelt, betragen die Frequenzabstände der Tonträger zu dem Bildträger 6,5 bzw. 6,742 MHz. Diese Frequenzdifferenzen zwischen dem Bildträger einerseits und den Tonträgern andererseits differieren je nach Übertragungsnorm des Fernsehsignals.

Der Kurvenverlauf B in Fig. 2 zeigt das Ausgangssignal des Bildsignal-Filters 2 der Schaltungsanordnung gemäß Fig. 1. Es ist hier das Bildsignal mit der bekannten Nyquistflanke ausgefiltert. Der Bildträger PC liegt nach wie vor bei 38,9 MHz.

Als dritter Kurvenverlauf ist in der Fig. 2 das Signal PC' dargestellt, welches das Ausgangssignal der Mittel 6 zur Fequenz-Verscheibung des auf Zwischenfrequenzlage umgesetzten Bildträgers darstellt. Dieses Signal wird in dem Mischer 7 gemäß Fig. 1 mit den auf die erste Zwischenfrequenzlage umgesetzten Tonträgern gemischt, so daß diese Tonträger ausgangsseitig mit den zweiten Ton-Zwischenfrequenzen auftreten. In dem Beispielsfall gemäß Fig. 1 sollen diese Tonträger Frequenzen von 5,5 bzw. 5,742 MHz entsprechend der Mittenfrequenzen der Filter 8 und 9 aufweisen. In dem in Fig. 2 dargestellten Beispielsfalle würde eine unmittelbare Mischung jedoch die Differenzfrequenzen 6,5 bzw. 6,742 MHz ergeben, die nicht mittels der Filter 8 und 9 ausgefiltert werden können. Es ist daher erfindungsgemäß vorgesehen, mittels der Mittel 6 eine Verschiebung des auf Zwischenfrequenzlage umgesetzten Bildträgers von 38,9 MHz auf eine solche Frequenz vorzunehmen, daß nach Mischung mit den auf die erste Zwischenfrequenzlage umgesetzten Tonträgern nach der Umsetzung auf die zweiten Ton-Zwischenfrequenzen die Tonträger bzw. die ihnen aufmodulierten Signale mit den Frequenzen 5,5 MHz bzw. 5,742 MHz auftreten. Dazu muß in dem Beispielsfall gemäß Fig. 2 der auf Zwischenfrequenzlage umgesetzte Bildträger um 1 MHz nach unten verschoben werden, so daß er mit einer Frequenz von 37,9 MHz auftritt, da diese Frequenz zu den auf die erste Zwischenfrequenzlage umgesetzten Tonträgern genau die gewünschten Frequenzdifferenzen von 5,5 bzw. 5,742 MHz liefert. Dies zeigen die Kurvenverläufe PC' bzw. C der Darstellung gemäß Fig. 2.

Der Kurvenverlauf D der Fig. 2 zeigt, daß bei der gewählten Frequenz-Verschiebung des auf Zwischenfrequenzlage umgesetzten Bildträgers um 1 MHz die Ausgangssignale des Mischers 7 in der Tat die auf die zweite Zwischenfrequenzlage umgesetzten Tonträger SC1 bzw. SC2 sowie die ihnen aufmodulierten Tonsignale im Frequenzbereich 5,5 bzw. 5,742 MHz enthalten. Damit sind die Tonträger auf die Mittenfrequenzen der Filter 8 und 9 umgesetzt worden, so daß diese Signale unmittelbar mittels dieser Filter ausgefiltert werden können.

Die Darstellung gemäß Fig. 2 zeigt, daß die Verschiebung des Bildträgers PC auf den neuen Wert PC' immer so erfolgen muß, daß der Frequenzabstand von PC' zu den auf die erste Zwischenfrequenzlage umgesetzten Tonträgern die gewünschten Frequenzen, die nachfolgend ausgefiltert werden sollen, liefert.

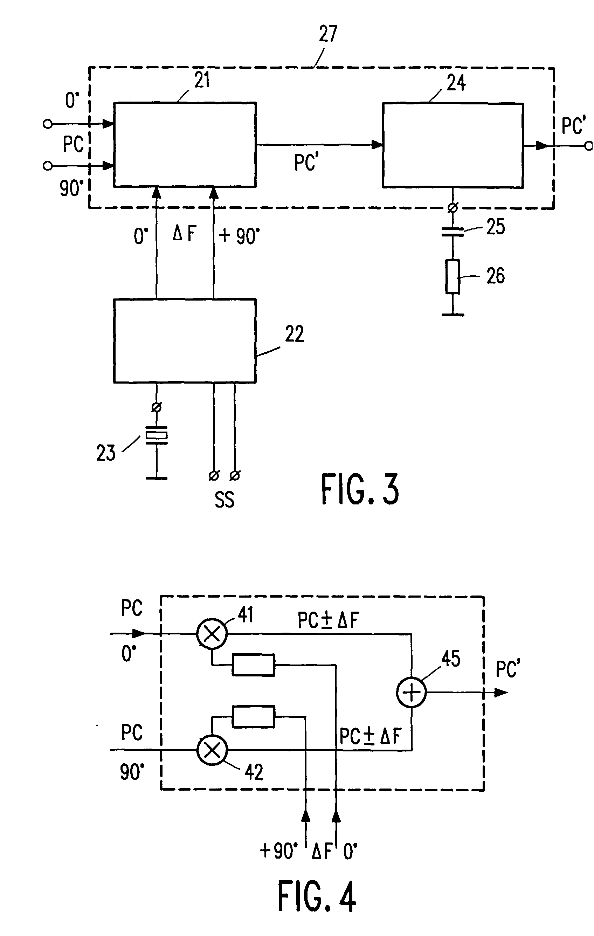

Nachfolgend soll anhand des Blockschaltbildes in Fig. 3 eine mögliche Ausgestaltung der Mittel 6 zur Frequenz-verschiebung für die Schaltungsanordnung gemäß Fig. 1 näher erläutert werden.

Das Blockschaltbild gemäß Fig. 3 zeigt eine Umsetzvorrichtung 27, welche einen Quadratur-Mischer 21 sowie eine Phase-Locked-Loop-Schaltung 24 aufweist. Ferner zeigt Fig. 3 eine Umsetz-Steuerung 22.

Die Umsetz-Steuerung 22, der ein mittels eines Oszillators 23 erzeugtes Referenz-Taktsignal zugeführt wird, erzeugt in Abhängigkeit der Übertragungsnorm des empfangenen Fernsehsignals ein Signal ΔF, das die erforderliche Frequenzverschiebung des Bildträgers angibt. Dieses Signal wird in zwei Phasenlagen geliefert, von denen die eine um +90° zur anderen verschoben ist.

Die Information über die Übertragungsnormen des empfangenen Fernsehsignals liegt in Multistandard-Fernsehempfängern ohnehin vor, da sie für andere Zwecke benötigt wird. Diese Information gelangt mittels eines Signals SS an die Umsetz-Steuerung 22, die in Abhängigkeit dieses Signals den Wert ΔF in erforderlicher Weise generiert.

Bei dem Mischer 21 gemäß Fig. 3 kann es sich insbesondere um einen Quadratur-Mischer handeln, wie er in Fig. 4 näher dargestellt ist. Dem Mischer wird eingangsseitig der Bildträger PC in Phasenlage 0° und +90° zugeführt. Der Bildträger mit Phasenlage 0° wird einem Mischer 41, der Bildträger mit Phasenlage +90° einem zweiten Mischer 42 zugeführt. Die von der Umsetzsteuerung 22 gemäß Fig. 3 ausgangsseitig gelieferten Umsetzsignale ΔF in den Phasenlagen 0° und +90° werden ebenfalls den Mischern 41, 42 zugeführt, wobei das Signal in Phasenlage 0° dem Mischer 41 und das Signal in Phasenlage +90° dem Mischer 42 zugeführt wird. Sollte es sich bei den Umsetzsignalen um Rechtecksignale handeln, so können diese vorteilhafterweise vor Zuführung zu den Mischern 41 bzw. 42 noch Anordnungen 43 bzw. 44 zur Umformung in Sinussignale zugeführt werden.

Der Mischer 41 des Quadratur-Mischers gemäß Fig. 4 liefert ausgangsseitig den ihm zugeführten Bildträger einmal um die Frequenz des Umsetzsignals ΔF nach unten und einmal um diese Frequenz nach oben verschoben. Der Mischer 42 liefert ebenfalls den Bildträger, der bezüglich seiner Frequenz um den Wert des Umsetzsignals ΔF frequenzmäßig nach unten verschoben ist. Er liefert außerdem diesen Bildträger um ΔF frequenzmäßig nach oben verschoben, dieser Bildträger ist jedoch bezüglich seiner Phasenlage um 180° gedreht. Werden diese Ausgangssignale der Mischer 41 und 42 in einem Summierer 45 überlagert, so heben sich die Signalanteile PC +ΔF des Mischers 41 und PC +ΔF des Mischers 42, wobei dieses Signal jedoch gegenüber dem Ausgangssignal des Mischers 41 um 180° phasenverschoben ist, gegenseitig auf. Die Signalanteile PC -ΔF der Ausgangssignale beider Mischer überlagern sich jedoch gleichphasig, so daß diese im Ausgangssignal des Mischers 45 mit doppelter Amplitude auftreten. Dieses Signal ist in der Darstellung gemäß Fig. 4 mit PC' gekennzeichnet. Es sind in diesem Signal nur noch geringe Mischprodukte der anderen Frequenzen vorhanden. Um diese noch weiter zu unterdrücken, ist gemäß der Darstellung in Fig. 3 eine PLL 24 nachgeschaltet, die auf diese ausgefilterte verschobene Bildträgerfrequenz PC' = PC -ΔF einrastet. Damit liefert die Umsetzvorrichtung 27 gemäß Fig. 3 ausgangsseitig einen stabilen Bildträger PC', der von weiteren Mischprodukten befreit ist. Dieses Signal kann dann vorteilhaft mit dem auf die erste Tonzwischenfrequenzlage umgesetzten Tonsignals des Multiplizierers gemäß Fig. 1 gemischt werden. Dieser Multiplizierer 7 liefert dann ausgangsseitig die auf die zweite Tonzwischenfrequenzlage umgesetzten Tonsignale, die mittels der Filter 8 bzw. 9 ausgefiltert werden können.

In diesem Beispielsfalle ist es also so, daß sich die Signalanteile PC +ΔF bei der Summierung im Addierer 45 aufheben und die Signalanteile PC -ΔF gleichphasig überlagern. Es wird also im Ergebnis das Mischprodukt mit der tieferen Frequenz ausgefiltert. Dies kann selbstverständlich auch umgekehrt geschehen, beispielsweise in der Weise, daß dem Multiplizierer 42 das Signal ΔF in einer Phasenlage -90° zugeführt wird. Dann tritt umgekehrt eine Aufhebung der Signalanteile PC -ΔF und eine gleichphasige Überlagerung der Signalanteile PC +ΔF auf.

## Patentansprüche

1. Multistandard-Fernsehempfänger, in welchem ein in einem Fernsehsignal enthaltenes, auf einen Bildträger aufmoduliertes Bildsignal auf eine Bildsignal-Zwischenfrequenz und ein in dem Fernsehsignal enthaltenes Stereo-Tonsignal oder Zweiton-Signal, das zwei Tonträgern aufmoduliert ist, auf zwei erste Tonsignal-Zwischenfrequenzen umgesetzt werden,
dadurch gekennzeichnet, daß zur Ausfilterung des Stereo-Tonsignals zwei Tonsignal-Filter (8, 9) mit fester vorgegebener Filter-Mittenfrequenz vorgesehen sind und daß Mittel (6) zur Frequenz-Verschiebung vorgesehen sind, welche den in dem auf Zwischenfrequenzlage umgesetzten Bildsignal enthaltenen Bildträger in Abhängigkeit des Frequenz-Abstandes des Bildträgers des Fernsehsignals zu dessen Tonträgern auf eine solche Frequenz verschieben, daß die mit diesem verschobenen Bildträger gemischten Ton-Zwischenfrequenz-Signale der ersten Ton-Zwischenfrequenzen auf zwei zweiten Tonsignal-Zwischenfrequenzen auftreten, die mittels der Ton-Zwischenfrequenz-Filter (8, 9) ausgefiltert werden.

2. Fernsehempfänger nach Anspruch 1,
dadurch gekennzeichnet, daß die Mittenfrequenzen der Tonsignal-Filter (8, 9) 5,5 und 5,742 MHz betragen.

3. Fernsehempfänger nach Anspruch 2,
dadurch gekennzeichnet, daß die ersten Tonsignal-Zwischenfrequenzen 32,4 und 32,158 MHz und die Frequenz, auf die der in dem auf Zwischenfrequenzlage umgesetzten Bildsignal enthaltene Bildträger verschoben wird, 37,9 MHz betragen.

4. Fernsehempfänger nach einem der Ansprüche 1 bis 3,
dadurch gekennzeichnet, daß die Mittel (6) zur Frequenz-Verschiebung eine Umsetz-Steuerung (22) aufweisen, welche in Abhängigkeit der Übertragungsnorm des Fernsehsignals und des gemäß dieser Norm vorgesehenen Frequenzabstandes zwischen Bildträger und den Tonträgern Umsetzsignale an eine Umsetzvorrichtung (27) gibt, welche in Abhängigkeit des Umsetzsignals eine Umsetzung der Frequenz des Bildträgers vornimmt, der in dem auf Zwischenfrequenzlage umgesetzten Bildsignal enthalten ist.

5. Fernsehempfänger nach einem der Ansprüche 1 bis 4,
dadurch gekennzeichnet, daß die Mittel (6) zur Frequenz-verschiebung einen Phase-Locked-Loop-Schaltkreis (24) aufweisen, der auf den bezüglich seiner Frequenz verschobenen Bildträger einrastet.

6. Fernsehempfänger nach einem der Ansprüche 1 bis 5,
dadurch gekennzeichnet, daß die Mittel (6) einen Quadraturmischer (21) aufweisen, in welchem der auf Zwischenfrequenzlage umgesetzte Bildträger und ein erstes Differenzsignal, das eine Frequenz entsprechend der Differenz der Frequenzen des in dem auf Zwischenfrequenzlage umgesetzten Bildträgers und des verschobenen Bildträgers aufweist, mittels eines ersten Multiplizierers (41) gemischt werden, daß in dem Quadraturmischer der auf Zwischenfrequenzlage umgesetzte und in seiner Phasenlage um 90° verschobene Bildträger und ein zweites Differenzsignal, das mit dem ersten Differenzsignal identisch, gegenüber diesem jedoch bezüglich seiner Phasenlage um 90° verschoben ist, mittels eines zweiten Multiplizierers (42) gemischt werden, und daß ein Addierer (45) vorgesehen ist, der die Ausgangssignale der beiden Mischer (41, 42) addiert.

7. Fernsehempfänger nach den Ansprüchen 4, 5 und 6,
dadurch gekennzeichnet, daß die Umsetzsignale, die die Umsetzsteuerung (22) an die Umsetzvorrichtung (27) liefert, das erste Differenzsignal und das zweite Differenzsignal enthalten und daß dem Addierer (45), der die von den beiden Multiplizierern gelieferten Signale addiert, die Phase-Locked-Loop-Schaltung (24) nachgeschaltet ist.

## Claims

1. A multistandard television receiver in which a picture signal comprised in a television signal and modulated on a picture carrier is converted to a picture signal intermediate frequency, and a stereo sound signal or two-tone signal comprised in the television signal and modulated on two sound carriers is converted to two first sound signal intermediate frequencies, characterized in that two sound signal filters (8, 9) having a fixed, predetermined filter central frequency are provided for filtering the stereo sound signal, and in that frequency shift means (6) are provided which, in dependence upon the frequency spacing between the picture carrier of the television signal and its sound carriers, shift the picture carrier comprised in the picture signal converted to the IF position to such a frequency that the sound IF signals of the first sound intermediate frequencies mixed with this shifted picture carrier occur at two second sound signal intermediate frequencies which are filtered by means of the sound IF filters (8, 9).

2. A television receiver as claimed in claim 1, characterized in that the central frequencies of the sound signal filters (8, 9) are 5.5 and 5.742 MHz.

3. A television receiver as claimed in claim 2, characterized in that the first sound signal intermediate frequencies are 32.4 and 32.158 MHz and the frequency, at which the picture carrier comprised in the picture signal converted to the IF position is shifted, is 37.9 MHz.

4. A television receiver as claimed in any one of claims 1 to 3, characterized in that the frequency shift means (6) are provided with a conversion control means (22) which, in dependence upon the transmission standard of the television signal and the frequency spacing between picture carrier and the sound carriers prescribed in accordance with this standard, supplies conversion signals to a conversion device (27) which, in dependence upon the conversion signal, converts the frequency of the picture carrier comprised in the picture signal converted to the IF position.

5. A television receiver as claimed in any one of claims 1 to 4, characterized in that the frequency shift means (6) are provided with a phase-locked loop circuit (24) which locks in on the picture carrier which is shifted as regards its frequency.

6. A television receiver as claimed in any one of claims 1 to 5, characterized in that the means (6) are provided with a quadrature mixer (21) in which the picture carrier converted to the IF position and a first difference signal having a frequency corresponding to the difference of the frequencies between the picture carrier convened to the IF position and the shifted picture carrier are mixed by means of a first multiplier (41), in that the picture carrier converted to the IF position and shifted 90° in phase and a second difference signal which is identical to the first difference signal but is 90° shifted in phase with respect thereto are mixed in the quadrature mixer by means of a second multiplier (42), and in that an adder (45) is provided which adds the output signals of the two mixers (41, 42).

7. A television receiver as claimed in any one of claims 4, 5 and 6, characterized in that the conversion signals supplied by the conversion control means (22) to the conversion device (27) comprise the first difference signal and the second difference signal, and in that the adder (45), which adds the signals supplied by the two multipliers, precedes the phase-locked loop circuit (24).

## Revendications

1. Récepteur de télévision multistandard dans lequel un signal d'image modulé sur une porteuse d'image et contenu dans un signal de télévision est modulé sur une fréquence intermédiaire de signal d'image et un signal audio stéréo ou signal différentiel contenu dans le signal de télévision qui est modulé sur deux porteuses de son sont déplacés sur deux premières fréquences intermédiaires du signal audio, caractérisé en ce qu'en vue du filtrage du signal audio stéréo, deux filtres de signaux audio (8, 9) sont prévus avec une fréquence centrale de filtre préalablement déterminée et fixe et que des moyens (6) sont prévus en vue du décalage de fréquence et décalent la porteuse d'image contenue dans le signal d'image déplacé sur sa position de fréquence intermédiaire en fonction de l'intervalle de fréquence de la porteuse d'image du signal de télévision par rapport à ses porteuses de son sur une fréquence telle que les signaux de fréquence intermédiaire audio mixés avec cette porteuse d'image décalée des premières fréquences intermédiaires audio se produisent sur deux deuxièmes fréquences intermédiaires du signal audio qui sont filtrées à l'aide des filtres de fréquence intermédiaire audio (8,9).

2. Récepteur de télévision selon la revendication 1, caractérisé en ce que les fréquences centrales des filtres de signaux audio (8, 9) s'élèvent à 5,5 et 5,742 MHz.

3. Récepteur de télévision selon la revendication 2, caractérisé en ce que les premières fréquences intermédiaires des signaux audio sont de 32,4 et 32,158 MHz et la fréquence à laquelle les porteuses d'image contenues dans le signal d'image déplacé sur la position de fréquence intermédiaire s'élève à 37,9 MHz.

4. Récepteur de télévision selon l'une des revendications 1 à 3, caractérisé en ce que les moyens (6) en vue du décalage de fréquence présentent une commande de conversion (22) qui délivre, en fonction de la norme de transmission du signal de télévision et l'intervalle de fréquence prévu conformément à cette norme entre la porteuse d'image et les porteuses de son, des signaux de conversion à un dispositif de conversion (27) qui, en fonction du signal de conversion, procède au déplacement de la fréquence de la porteuse d'image qui est contenue dans le signal d'image déplacé sur une position de fréquence intermédiaire.

5. Récepteur de télévision selon l'une des revendications 1 à 4, caractérisé en ce que les moyens (6) en vue du décalage de fréquence présentent un circuit phase-locked loop (24) qui s'enclenche sur la porteuse d'image décalée par rapport à sa fréquence.

6. Récepteur de télévision selon l'une des revendications 1 à 5, caractérisé en ce que les moyens (6) présentent un mixeur de quadrature (21) dans lequel la porteuse d'image déplacée sur sa position de fréquence intermédiaire et un premier signal différentiel qui présente une fréquence correspondant à la différence des fréquences de la porteuse d'image déplacée sur sa position de fréquence intermédiaire et de la porteuse d'image décalée sont mixés à l'aide d'un premier multiplicateur (41), que, dans le mixeur de quadrature, la porteuse d'image déplacée sur sa position de fréquence intermédiaire et décalée de 90° dans sa position de phase et un deuxième signal différentiel qui est identique au premier signal différentiel mais présente un décalage de phase de 90° par rapport à celui-ci sont mixés à l'aide d'un deuxième multiplicateur (42) et qu'il est prévu un additionneur (45) qui additionne les signaux de sortie des deux mixeurs (41, 42).

7. Récepteur de télévision selon l'une des revendications 4, 5 et 6, caractérisé en ce que les signaux de conversion que la commande de conversion (22) délivre aux dispositifs de conversion (27) contiennent le premier signal différentiel et le deuxième signal différentiel et que le circuit phase-locked-loop (24) est monté en aval de l'additionneur (45) qui additionne les signaux délivrés par les deux multiplicateurs.
